(19) **Europäisches Patentamt**

**European Patent Office**

**Office européen des brevets**

(11) **EP 1 023 826 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.⁷: **A01F 29/10**

(21) Anmeldenummer: **99124604.2**

(22) Anmeldetag: **10.12.1999**

(54) **Erntemaschine mit Durchsatzmessvorrichtung**

Harvesting machine with throughput measuring device

Moissonneuse à dispositif de mesure du débit de produit récolté

(84) Benannte Vertragsstaaten:
**AT BE CH CY DE DK ES FI FR GB GR IE IT LI LU MC NL PT SE**

(30) Priorität: **29.01.1999 DE 19903471**

(43) Veröffentlichungstag der Anmeldung:
**02.08.2000 Patentblatt 2000/31**

(73) Patentinhaber: **DEERE & COMPANY**
**Moline, Illinois 61265-8098 (US)**

(72) Erfinder: **Ohlemeyer, Heinrich**
**32479 Hille (DE)**

(74) Vertreter: **Magin, Ludwig Bernhard et al**
**Deere & Company**
**European Office**
**Patent Department**
**68140 Mannheim (DE)**

(56) Entgegenhaltungen:
**EP-A- 0 835 603          DE-A- 2 609 272**
**DE-A- 19 539 143      DE-B- 1 199 039**
**US-A- 5 795 221**

• **DATABASE WPI Section PQ, Week 198846 Derwent Publications Ltd., London, GB; Class P12, AN 1988-329348 XP002134094 & SU 1 395 955 A (NON-BLACK EARTH AGR), 15. Mai 1988 (1988-05-15)**

**Beschreibung**

Die Erfindung betrifft eine Durchsatzmeßvorrichtung gemäß des Oberbegriffs des Anspruchs 1 und ein Verfahren nach dem Oberbegriff des Anspruchs 12.

Aus der DE 195 24 752 A geht eine Vorrichtung und ein Verfahren zur Durchsatzmessung in einem Feldhäcksler mit einer Durchsatzmeßeinrichtung hervor. Dabei wird die vertikale Bewegung einer Vorpreßwalze über ein Hebelgestänge auf die Drehachse eines Potentiometers übertragen welches dem Hubweg entsprechende Hubsignale ausgibt. Ein Induktivgeber erzeugt einen aus der Drehzahl einer Vorpreßwalze abgeleiteten Drehzahlsignalwert, welcher die Durchflußgeschwindigkeit des durch die Maschine hindurchfließenden Gutstroms repräsentiert. Die Signalwerte werden in einem Mikroprozessor kontinuierlich in einen absoluten Mengenmeßwert umgerechnet. Zusätzlich können Signale einer Drehmomentenmessung an der Häckseltrommel und einer Schlupfmessung des Antriebsriemens erfaßt werden und in Bereichen definierter Grenzwerte, in denen sich eine Vorpreßwalze den oberen oder unteren Anschlägen nähert, als Korrekturwerte genutzt werden. Es hat sich jedoch herausgestellt, daß diese Korrekturen im oberen und unteren Anschlagbereich sehr störungsanfällig sind und einen hohen Kalibrieraufwand erfordern.

In der DE 196 32 868 C wird eine Aufbereitungseinrichtung einer landwirtschaftlichen Bearbeitungsmaschine beschrieben. Sie ist mit einem Sensor versehen, der im Antriebsweg des rotierenden Bearbeitungsteils angeordnet ist, und ein Drehmoment, einen Druck oder eine Kraft erfaßt, mit der das Bearbeitungsteil angetrieben wird. Außerdem kann ein Sensor die Anpreßkraft eines Zustellteils (Rechen oder Walze) an das Bearbeitungsteil erfassen, wenn ein durch einen Federmechanismus vorgegebener Druck überschritten wird. Anhand der vom Sensor erfaßten Werte wird die Position des Zustellteiles durch eine Regeleinrichtung mit der Zielvorgabe einer gleichmäßigen Belastung der Aufbereitungseinrichtung gesteuert. Dabei wird auch die Stellung des Zustellteils durch einen ihm zugeordneten Sensor erfaßt und mit der Sollposition verglichen. Dieser Druckschrift ist nicht entnehmbar, die Signale des Sensors für die Belastung des Bearbeitungsteils zur Korrektur von Durchsatzmeßwerten zu verwenden.

Die der Erfindung zugrunde liegende Aufgabe wird darin gesehen, eine Durchsatzmeßvorrichtung, eine Erntemaschine mit einer Durchsatzmeßvorrichtung und ein Verfahren zur Ermittlung des Erntegutdurchsatzes der eingangs genannten Art anzugeben, durch welche wenigstens einige der vorgenannten Probleme überwunden werden. Insbesondere soll die Durchsatzmeßvorrichtung unter Verwendung relativ weniger Sensoren eine zuverlässige und genaue Erfassung des Massedurchsatzes des Erntegutes erlauben. Bei der Anwendung des Meßverfahrens soll eine Berücksichtigung dynamischer Maschinendaten nicht erforderlich sein.

Die Aufgabe wird erfindungsgemäß durch die Lehre eines der Patentansprüche 1, 10 oder 12 gelöst. Weitere vorteilhafte Ausgestaltungen und Weiterbildungen der Erfindung gehen aus den abhängigen Unteransprüchen hervor.

Die erfindungsgemäße Durchsatzmeßvorrichtung zur Ermittlung des Erntegutmassedurchsatzes ist für eine landwirtschaftliche Erntemaschine, insbesondere einen Feldhäcksler, vorgesehen, die wenigstens eine das Erntegut führende und verdichtende Vorpreßwalze, deren Abstand von einem Förderelement aufgrund des jeweiligen Erntegutdurchsatzes zwischen einer minimalen Grenzlage und einer maximalen Grenzlage variiert, aufweist. Die Durchsatzmeßvorrichtung enthält eine Abstandsmeßvorrichtung, die den Abstand zwischen der Vorpreßwalze und dem Förderelement erfaßt und entsprechende Abstandssignale bereitstellt, und einen Geschwindigkeitsgeber, der die Durchflußgeschwindigkeit des Ernteguts, insbesondere im Bereich einer Vorpreßwalze, erfaßt und entsprechende Geschwindigkeitssignale bereitstellt. Eine Rechnereinrichtung berechnet aus den Abstandssignalen und den Geschwindigkeitssignalen aktuelle Mengendurchsatzwerte. Die erfindungsgemäße Durchsatzmeßvorrichtung enthält desweiteren wenigstens einen Kraftaufnehmer, der im Bereich der maximalen Grenzlage einer verstellbaren Vorpreßwalze angeordnet und wirksam ist und der die auf die verstellbare Vorpreßwalze wirkenden Verstellkräfte, denen Walzenanschlagdrücke entsprechen, aufnimmt und erfaßt. Die Rechnereinrichtung bezieht die Kraftaufnehmersignale in die Ermittlung der aktuellen Massendurchsatzwerte ein.

Im mittleren Abstandsbereich zwischen der Vorpreßwalze und dem Förderelement ist der Kraftaufnehmer nicht wirksam. Hier erfolgt die Ermittlung der Erntegutdurchsatzmenge anhand der Abstandssignale und der Geschwindigkeitssignale, wobei die Kraftaufnehmersignale sich nicht auswirken. Wenn jedoch die auslenkbare Vorpreßwalze mit zunehmender Durchsatzmenge ihre Grenzlage erreicht, bei der sich ein maximaler Abstand zwischen den Vorpreßwalzen ergibt, erfolgt eine weitere Steigerung des Masseflusses durch weitere Kompression des Erntegutes. Im Bereich der Grenzlage tritt die Vorpreßwalze mit dem Kraftaufnehmer in Kontakt, dessen Federkraft gegen eine weitere Auslenkung der Vorpreßwalze wirkt und der Kraftaufnehmersignale abgibt. Die Kraftaufnehmersignale spiegeln die zusätzliche Verdichtungskraft im Bereich der Grenzlage wieder und dienen der Korrektur der anhand der Abstands- und der Geschwindigkeitssignale ermittelten Massendurchsatzwerte.

Die erfindungsgemäße Durchsatzmeßvorrichtung ermöglicht mit günstigen Mitteln unter Verwendung weniger, kostengünstiger Sensoren und Bauteile bei einem unauffälligen Design eine sehr zuverlässige Erntegutdurchsatzerfassung bei hohem Auflösungsvermögen auch im Bereich maximaler Auslenkung der beweglichen Vorpreßwalze. In die Auswertung brauchen dynamische Maschinendaten nicht einbezogen werden. Auch kann auf die Erfassung und Auswertung von Drehmomentsignalen und Schlupfsignalen verzichtet werden. Zur Korrektur im maximalen Abstandsbereich ist lediglich ein an der beweglichen Vorpreßwalze angreifender Kraftaufnehmer erforderlich. Die ermittelte Durchsatzmenge läßt sich auf einfache Weise auf absolute Durchsatzmengenwerte eichen.

Als Förderelement, das mit der Vorpreßwalze zusammenwirkt, kommt insbesondere eine zweite Vorpreßwalze in Frage. Alternativ kann die Vorpreßwalze auch mit einer festen Wand zusammenwirken.

Bei der erfindungsgemäß ausgebildeten Maschine handelt es sich um eine landwirtschaftliche Maschine zur Aufnahme und Behandlung von Erntegut, insbesondere um einen Feldhäcksler, der einen Erntevorsatz, wenigstens ein Paar das Erntegut führende und verdichtende Vorpreßwalzen, deren Abstand aufgrund des jeweiligen Erntegutdurchsatzes zwischen einer minimalen Grenzlage und einer maximalen Grenzlage variiert, einen Auswurfkanal und eine erfindungsgemäße Durchsatzmeßvorrichtung enthält.

Vorzugsweise sind die Vorpreßwalzen der Erntemaschine im wesentlichen senkrecht oder schräg übereinander angeordnet. Die untere Vorpreßwalze ist dabei ortsfest gelagert, während die obere Vorpreßwalze beweglich geführt ist und gegen auf sie wirkende Kräfte, beispielsweise Gewichts- und/oder Federkräfte, nach oben bis zu einer maximalen Grenzlage ausweichen kann. Die Wellenenden der oberen Vorpreßwalze können in bekannter Weise in Schlitzen derart geführt sein, daß die obere Vorpreßwalze mit zunehmender Durchsatzmenge nach oben ausweichen kann.

Beim Ausweichen der Vorpreßwalze verändert sich die Breite des Durchtrittsspalt für das Erntegut sowie der Abstand zwischen den Vorpreßwalzen. Auf die auslenkbare Vorpreßwalze wirkt dabei die aus ihrem Eigengewicht resultierende Kraft. Andererseits kann sie auch durch wenigstens eine Federanordnung, beispielsweise in Form einer Spiralfeder, gegen die ortsfeste Vorpreßwalze gedrückt werden. Die Federkennlinie der Federanordnung ist dabei vorzugsweise derart ausgelegt, daß die Federkraft und damit auch der auf das Durchsatzmaterial wirkende Druck, mit zunehmender Auslenkung der Vorpreßwalze und mit sich vergrößerndem Abstand zwischen den Vorpreßwalzen zunimmt. Dies bewirkt eine höhere Dichte des Gutstroms und kann in die Berechnung des Masseflusses einbezogen werden, indem der Abstandswert mit einer entsprechenden Korrektur versehen wird.

Es ist zweckmäßig, einen möglichst homogenen Erntegutdurchsatz zu haben, so daß gemäß einer Weiterbildung der erfindungsgemäßen Erntemaschine ein Erntevorsatz vorgesehen ist, der eine homogene Erntegutzuführung ermöglicht. Als Erntevorsatz eignet sich besonders ein reihenunabhänges Maisgebiß.

Gemäß einer bevorzugten Ausgestaltung der Durchsahtzmeisvorrichtung sind zwei Kraftaufnehmer vorgesehen, die im Bereich jedes der beiden Enden der verstellbaren Vorpreßwalze angeordnet werden. Die Kraftaufnehmer können an beiden Seiten des Einzugswalzengehäuses so angebracht werden, daß eine Querstrebe der oberen Vorpreßwalze, sobald sie eine Position erreicht, die einem gewissen Abstand zur oberen Kante (Anschlag) des Führungsschlitzes der Vorpreßwalze entspricht, gegen den Aufnahmepunkt des Kraftaufnehmers trifft. Die Signale der beiden Kraftaufnehmer können gemittelt und als ein gemeinsames Kraftaufnehmersignal in der Rechnereinrichtung weiterverarbeitet werden. Dies ermöglicht auch bei einem längs der Vorpreßwalzen ungleichmäßigen Erntegutdurchsatz, bei dem die Spaltbreite zwischen den Vorpreßwalzen nicht gleichförmig ist, eine relativ genaue Erfassung des auf das Erntegut wirkenden Drucks.

Vorzugsweise ist der Kraftaufnehmer derart ausgebildet und angeordnet, daß er ungefähr 5 mm vor Erreichen eines mechanischen Endanschlags der Vorpreßwalze anspricht. Als Kraftaufnehmer eignet sich beispielsweise ein Druckkraftaufnehmer der Fa. Spectris, Deutschland, Typ C9B, 20kN. Jedoch lassen sich bei großen Erntemaschinen auch Kraftaufnehmer erfolgreich einsetzen, deren Meßbereich ungefähr zwischen 0 bis 50 kN liegt. Bei dem Kraftaufnehmer kann es sich um eine Kraftmeßdose oder einen Biegebalken handeln.

Es hat sich auch als besonders zweckmäßig erwiesen, im Bereich der Aufnahmefläche des Kraftaufnehmers ein Elastomer vorzusehen, das den Kraftaufnehmer gegen Überlast schützt.

Um auch bei einem längs der Vorpreßwalzen ungleichmäßigen Materialstrom und daher ungleichförmigen Spalt zwischen den Vorpreßwalzen eine zuverlässige Erfassung des Abstands zwischen den Vorpreßwalzen zu ermöglichen, sieht eine bevorzugte Ausgestaltung der Erfindung vor, die Abstandsmeßvorrichtung derart auszubilden, daß sie zur Messung des Walzenabstands im mittleren Bereich einer verstellbaren Vorpreßwalze angreift.

Eine bevorzugte Weiterbildung der Erfindung sieht vor, daß zur Messung des Abstands zwischen den Vorpreßwalzen, insbesondere zur Messung des Hubwegs der oberen Vorpreßwalze, ein Seilpotentiometer verwendet wird. Der Meßbereich des Seilpotentiometers kann mehrere Umdrehungen umfassen, so daß eine hohe Meßauflösung gegeben ist. Ein Seilpotentiometer, das eine mit einem linearen Wegaufnehmer vergleichbare Auflösung aufweist, kann wesentlich kompakter als letzterer ausgebildet sein und ermöglicht bzw. erleichtert daher eine Anordnung innerhalb der Maschinenverkleidung. Vorzugsweise kann die Abstandsmeßvorrichtung einen Auslenkhub bis zu ungefähr 300 mm erfassen.

Desweiteren ist es von Vorteil, als Geschwindigkeitsgeber einen Drehzahlgeber zu verwenden, der die Drehzahl einer ortsfest gelagerten Vorpreßwalze erfaßt. Vorzugsweise handelt es sich bei dem Drehzahlgeber um einen handelsüblichen Impulsgeber.

Gemäß einer weiteren besonders bevorzugten Weiterbildung der Erfindung ist in dem Auswurfkanal der Erntemaschine wenigstens eine Lichtschranke montiert, die den ausgeworfenen Materialfluß überwacht. Das Signal der Lichtschranke wird insbesondere dann zur Bestimmung des Erntegutdurchsatzes herangezogen, wenn die Vorpreßwalzen einen minimalen Abstand zueinander einnehmen. Bei minimalem Vorwalzenabstand wird ein konstanter minimaler Erntegutdurchsatz ausgegeben, sofern ein Materialfluß im Auswurfkanal erkannt wird. Liegt kein Materialfluß vor, wird der Erntegutdurchsatz gleich Null gesetzt.

Bei dem erfindungsgemäßen Verfahren zur Ermittlung des Erntegutdurchsatzes in einer landwirtschaftlichen Erntemaschine, insbesondere einem Feldhäcksler, bestimmt die Rechnereinrichtung innerhalb eines mittleren Abstandsbereich der Vorpreßwalzen die Durchsatzmenge in Abhängigkeit des Produktes aus einem Walzenabstandssignal und dem Geschwindigkeitssignal. Nehmen die Vorpreßwalzen einen maximalen Abstand zueinander ein, bei dem sich die verstellbare Vorpreßwalze im Meßbereich des Kraftaufnehmers befindet, so bestimmt die Steuereinheit die Durchsatzmenge in Abhängigkeit des Produkts aus einem maximalen Walzenabstandswert zuzüglich eines Kraftaufnehmersignals einerseits und dem Geschwindigkeitssignal andererseits.

Es ist von Vorteil, bei der Bildung des Walzenabstandssignals ein von der Abstandsmeßvorrichtung bereitgestelltes Abstandssignal unter Berücksichtigung der Kennlinie einer auf die Vorpreßwalze wirkenden Federanordnung zu korrigieren.

Gemäß einer bevorzugten Weiterbildung des erfindungsgemäßen Verfahrens gibt die Rechnereinrichtung für einen unteren Abstandsbereich der Vorpreßwalzen, in dem diese im wesentlichen ihren minimalen Abstand zueinander einnehmen, einen konstanten Wert für die Durchsatzmenge aus, sofern eine Lichtschranke im Auswurfkanal einen Erntegutdurchsatz anzeigt. Andernfalls wird die Durchsatzmenge auf Null gesetzt. Dieser Maßnahme liegt die Erkenntnis zugrunde, daß bei minimalem Walzenabstand allenfalls ein geringer Massefluß gegeben ist, bei dem eine pauschale Ernteguterfassung ausreicht.

Vorzugsweise wird der bei minimalem Vorwalzenabstand verwendete konstante Wert aus dem Produkt aus einem minimalen Walzenabstandswert und dem Durchflußgeschwindigkeitssignal, beispielsweise dem Walzendrehzahlsignal, ermittelt.

Es hat sich als besonders vorteilhaft erwiesen, den Massefluß $M_t$ anhand folgender Beziehung zu bestimmen:

$$M_t = k * (d_1 + d_2 + d_3) * \omega$$

mit

$$d_1 = 1/2 * d_{min} * f(boolean)$$

$$d_2 = f(R) * d_{max} + f\ Feder$$

$$d_3 = f(F)$$

Dabei ist k eine Konstante, $\omega$ ein Meßwert des Geschwindigkeitsgebers, insbesondere die Walzendrehzahl, $d_1$, $d_2$ und $d_3$ abgeleitete Walzenabstände, $d_{min}$ ein minimaler Walzenabstand, $d_{max}$ ein maximaler Walzenabstand, f(boolean) eine logische Funktion anhand der ein Lichtschrankensignal ausgewertet wird, f(R) ein von der Abstandsmeßvorrichtung abgeleiteter und auf den maximalen Walzenabstand normierter Walzenabstandswert, f(Feder) ein aus der Federkennlinie der Vorpreßwalzen-Federanordnung in Abhängigkeit des Walzenabstandes abgeleiteter Wert und f(F) ein von einem oder mehreren Kraftaufnehmern abgeleiteter Verstellkraftwert.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:

Fig. 1 einen selbstfahrenden Feldhäcksler in Seitenansicht mit erfindungsgemäßer Durchsatzmeßvorrichtung,

Fig. 2 das Einzugsgehäuse eines Feldhäckslers mit erfindungsgemäßer Durchsatzmeßvorrichtung, und

Fig. 3 ein Flußdiagramm zur Berechnung des Masseflusses.

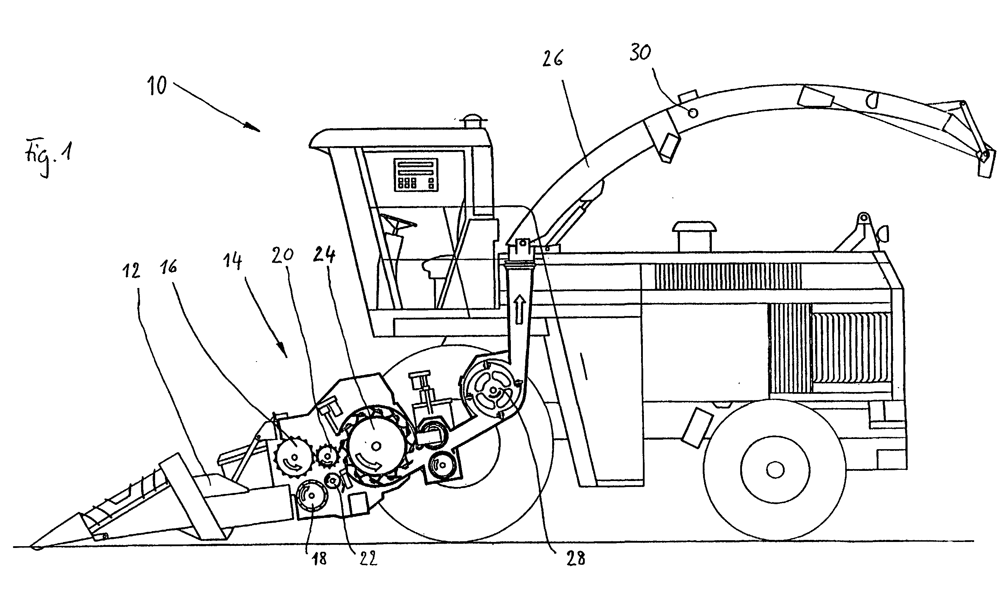

Aus Figur 1 geht ein selbstfahrender Feldhäcksler 10 mit einem Erntevorsatz 12 und einer Gutzuführeinrichtung 14, die aus mehreren Vorpreßwalzen 16, 18, 20, 22 gebildet wird, hervor. Vom Erntevorsatz 12 wird das Erntegut in Richtung A durch einen zwischen den Vorpreßwalzen 16, 18, 20, 22 ausgebildeten Preßkanal zwangsweise einer Messertrommel 24 zugeführt. Hier wird das Erntegut geschnitten und in Richtung B weitergeleitet. Mit einem Gebläse 28 wird das geschnittene Erntegut beschleunigt und durch den Auswurfkanal 26 befördert. Im Auswurfkanal 26 ist eine Lichtschranke 30 angeordnet, die das geschnittene Erntegut erfaßt und feststellt, ob Materialfluß existiert oder nicht.

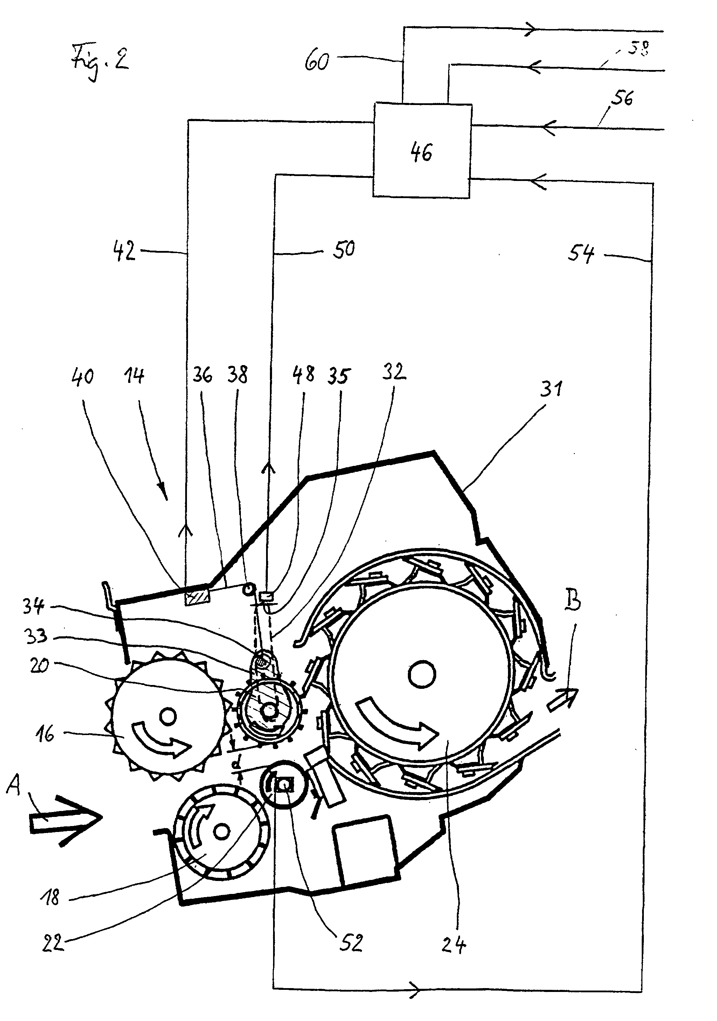

Fig. 2 zeigt Einzelheiten der Gutzufuhreinrichtung 14 und der Schneidtrommel 24, die in einem Einzugsgehäuse 31 angeordnet sind. Die Gutzufuhreinrichtung 14 enthält zwei vordere Vorpreßwalzen 16, 18, die eine Vorverdichtung des bei A eintretenden Erntegutes bewirken. Eine homogene Verdichtung und Weiterführung des Ernteguts erfolgt dann zwischen den zwei hinteren Vorpreßwalzen 20, 22, die einen variablen Abstand d zueinander aufweisen.

Die hintere untere Vorpreßwalze 22 ist ortsfest gelagert, während die hintere obere Vorpreßwalze 20 in seitlichen Schlitzen 32 geführt ist. An den beiden Enden der hinteren oberen Vorpreßwalze 20 ist je ein sich nicht mitdrehender Flansch 33 angeordnet. Die beiden Flansche 33 tragen eine zur Vorpreßwalze 20 parallele Querstrebe 34, die sich mit der Vorpreßwalze 20 auf- und abbewegt und deren Enden ebenfalls in den seitlichen Schlitzen 32 geführt sind. Die hintere obere Vorpreßwalze 20 kann im wesentlichen in vertikaler Richtung zwischen einem unteren Anschlag und einem oberen Anschlag 35 ausweichen. Beim Erreichen des unteren Anschlags schlagen die Enden der Vorpreßwalze 20 an den unteren Enden der Schlitze 32 an, während beim Erreichen des oberen Anschlags 35 die Enden der Querstrebe 34 an den oberen Enden der Schlitze 32 anschlagen.

Hinsichtlich ihrer Längserstreckung ist im mittleren Bereich der Querstrebe 34 ein Seil 36 angebracht, das über eine Umlenkrolle 38 zu einem Seilpotentiometer 40 geführt ist. Hiermit wird ohne weitere Übertragungsverluste die vertikale Auslenkung der Querstrebe 34 und damit auch der hinteren oberen Vorpreßwalze 20 erfaßt und in einen Meßwert umgewandelt, der abhängig ist von der Spaltbreite, bzw. dem Abstand d zwischen den beiden hinteren Vorpreßwalzen 20, 22. Die im Seilpotentiometer 40 erzeugte Widerstandsänderung wird durch einen integrierten Verstärker in ein Spannungssignal umgewandelt und über eine Datenleitung 42 an einen Prozessor 46 weitergeleitet.

Mit zunehmendem Erntegutdurchsatz bewegt sich die obere Vorpreßwalze 20 nach oben bis sie den oberen Anschlag 35 erreicht, der die Spaltbreite d des Durchtrittskanals beschränkt. Auch wenn die obere Vorpreßwalze 20 am oberen Anschlag anliegt, kann durch weiteres Zusammenpressen des Ernteguts ein höherer Massefluß erreicht werden. Zur Berücksichtigung dieses Einflusses, ist kurz vor dem oberen Anschlag 35 im Bereich jedes der beiden Enden der Querstrebe 34 eine Kraftmeßdose 48 montiert. Die Kraftmeßdose nimmt die Kraft auf, durch die die obere Vorpreßwalze 20 bei sehr hohem Durchsatz nach oben gedrückt wird. Die beiden ermittelten Kraftmeßwerte, werden über Datenleitungen 50 an den Prozessor 46 weitergeleitet und dort gemittelt.

Durch einen Impulsgeber 52 wird die Drehzahl der unteren Vorpreßwalze 22 gemessen. Dieser Drehzahlmeßwert ist proportional zur Materialgeschwindigkeit im Einzugskanal zwischen den beiden hinteren Vorpreßwalzen 20, 22 -und wird über eine Datenleitung 54 an den Prozessor 46 weitergeleitet. Die Drehzahlsignale sind im wesentlichen proportional zur Materialgeschwindigkeit im Einzugskanal zwischen den beiden hinteren Vorpreßwalzen 20, 22.

Der Signalwert der in Fig. 1 im Bereich des Auswurfkanals 26 dargestellten Lichtschranke 30 wird über eine Datenleitung 56 dem Prozessor 46 zugeführt. Desweiteren steht der Prozessor 46 über eine Datenleitung 58 mit einer in der Fahrerkabine installierten, nicht näher dargestellten Eingabeeinheit, durch die beispielsweise Vorgaben hinsichtlich des aktuellen Ernteguts und Kalibrierungen erfolgen können, in Verbindung. Der Prozessor 46 wertet die ihm zugeführten Signale aus und gibt die Ergebnisse über wenigstens eine Leitung 60 an eine in der Fahrerkabine angeordnete Anzeige oder an weitere, ebenfalls nicht näher dargestellte Steuer- und/oder Speichereinrichtungen aus.

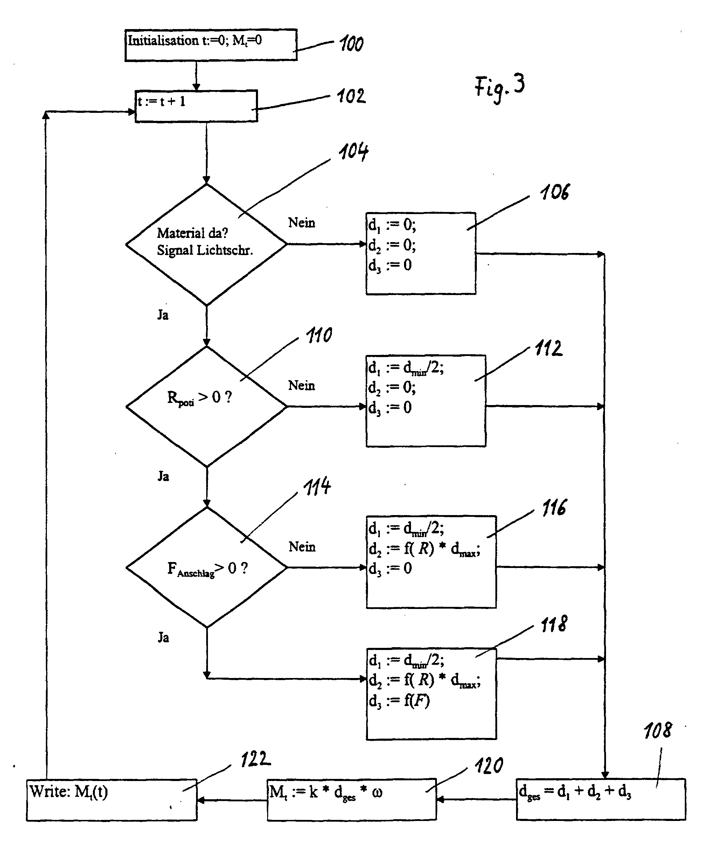

Der Prozessor 46 berechnet aus den ihm zugeführten Signalen den Massefluß $M_t$. Die Berechnung kann beispielsweise anhand des in Fig. 3 dargestellten Flußdiagramms erfolgen:

Beim Starten erfolgt in Schritt 100 eine Initialisierung, bei der die Zeit t und der zu bestimmende Massefluß $M_t$ auf Null gesetzt werden. In Schritt 102 wird der Zeitwert um eine Zeiteinheit erhöht. Der Algorithmus prüft dann in Schritt 104, ob die Lichtschranke 30 einen Materialfluß registriert. Wird kein Materialfluß festgestellt, werden in Schritt 106 die Werte $d_1$, $d_2$ und $d_3$ gleich Null gesetzt und mit Schritt 108 weiterverfahren. In diesem Fall ergibt sich ein Massefluß $M_t = 0$.

Registriert die Lichtschranke 30 hingegen einen Massefluß, so schreitet der Algorithmus zu Schritt 110 fort, in dem festgestellt wird, ob das Ausgangssignal des Seilpotentiometers 40 größer als Null ist. Ist dies nicht der Fall, so liegt die obere Vorpreßwalze 20 an dem unteren Anschlag an. Da in diesem Fall zwischen den Vorpreßwalzen 20, 22 ein geringer Spalt verbleibt, ist ein geringer Massefluß möglich, der durch die Lichtschranke 30 festgestellt wird. Dieser Massefluß ist im Vergleich zu den Masseflüssen bei normalem Betrieb so gering, daß er durch einen Mittelwert pauschal berücksichtigt werden kann ohne das Gesamtmeßergebnis unangemessen zu verfälschen. Ist das Ausgangssignal des Seilpotentiometers Null, so werden daher in Schritt 112 der Wert $d_1 = d_{min}/2$ und die Werte $d_2 = d_3 = 0$ gesetzt, und es wird mit Schritt 108 weiterverfahren. Dies hat zur Folge, daß ein konstanter minimaler Massefluß $M_t$ ausgegeben wird.

Ist der Materialfluß so groß, daß er die obere Vorpreßwalze 20 anhebt, so daß diese nicht mehr an dem unteren Anschlag anliegt, so gibt das Seilpotentiometer ein Signal größer als Null aus. In diesem Fall lenkt der Schritt 110 den Algorithmus auf Schritt 114. In Schritt 114 werden die Signale der Kraftmeßdosen 48 überprüft. Sind diese Null, bedeutet dies, daß die obere Vorpreßwalze 20 durch den Materialfluß noch nicht in den Bereich des oberen Anschlags 35 angehoben wurde. Wenn dies zutrifft, werden in Schritt 116 die Werte $d_1 = d_{min}/2$, $d_2 = f(R) * d_{max}$ und $d_3 = 0$ gesetzt, und es wird mit Schritt 108 weiterverfahren. Der Arbeitsbereich zwischen dem unteren und dem oberen Anschlag wird durch die Größe $d_2$ berücksichtigt, die einen linearen Zusammenhang zwischen Walzenabstand und Massefluß herstellt.

Wird jedoch die obere Vorpreßwalze 20 durch den Materialfluß so weit angehoben, daß sie sich im Bereich des oberen Anschlags befindet, wobei die Querstrebe 34 an wenigstens eine Kraftmeßdose 48 anschlägt und auf diese eine Kraft ausübt, so ergibt sich ein Kraftdosensignal das ungleich Null ist. In diesem Fall werden in Schritt 118 die Werte $d_1 = d_{min}/2$, $d_2 = f(R) *  d_{max}$ und $d_3 = f(F)$ gesetzt, und es wird dann mit Schritt 108 weiterverfahren. Der Arbeitsbereich, bei dem sich die obere Vorpreßwalze 20 im Bereich des oberen Anschlags befindet, wird durch die Messung des Anpreßdruckes der oberen Walze an den oberen Anschlag, der im wesentlichen als proportional zur möglichen weiteren Auslenkung der Walze angesehen werden kann, abgedeckt.

In Schritt 108 werden die Werte $d_1$, $d_2$ und $d_3$ zu einem Wert $d_{ges}$ addiert. In Schritt 120 wird dann der Massefluß $M_t$ berechnet, indem der Wert $d_{ges}$ mit dem Ausgangssignal $\omega$ des Impulsgebers 52 sowie mit einer Eichkonstanten k multipliziert wird. Schritt 122 gibt den ermittelten Massefluß $M_t$ aus und lenkt den Algorithmus zurück zu Schritt 102, in dem wiederum die Zeit um eine Zeiteinheit erhöht wird. Der beschriebene Algorithmus kann automatisch mehrmals pro Sekunde ausgeführt werden.

Die in dem Algorithmus gemäß Fig. 3 verwendeten Größen und Funktionen haben folgende Bedeutungen:

$d_{min}$ entspricht dem minimalen Abstand der Vorpreßwalzen 20, 22.

$d_{max}$ entspricht dem maximalen Abstand der Vorpreßwalzen 20, 22.

f(R) ist ein von der Abstandsmeßvorrichtung abgeleiteter und auf den maximalen Walzenabstand $d_{max}$ normierter Walzenabstandswert.

f(F) ist ein von den Kraftmeßdosen 48 abgeleiteter, der Verstellkraft entsprechender Wert.

$\omega$ ist ein der Walzendrehzahl entsprechender Wert.

k ist eine Eichkonstante, die durch Versuche bestimmbar ist.

Die Größen f(R), f(F) und k können von dem jeweiligen Erntegut abhängen. Beispielsweise können in verschiedenen Fruchtarten unterschiedliche Dichten erreicht werden, so daß im Prozessor 46 gutspezifische Werte abgelegt werden, die in die Konstanten und Funktionen zur Berechnung der Durchsatzmenge einfließen.

Es kann auch eine Funktion für die Zusammenpreßbarkeit des Ernteguts im Prozessor 46 hinterlegt werden.

Die Bedienungsperson gibt bei geeichtem system über eine Eingabe lediglich die zu erntende Fruchtart und gegebenenfalls Feuchtebedingungen ein. Im Prozessor werden dann automatisch die zugehörigen Konstanten und Funktionen für die Berechnung der Durchsatzmenge ausgewählt. Mit den durch den Prozessor 46 errechneten Durchsatzwerten und anderen Daten (Position, Fahrgeschwindigkeit, Arbeitsbreite) können die Ertragsdaten ermittelt sowie eine Ertragskarte aufgestellt werden.

## Patentansprüche

1. Durchsatzmeßvorrichtung zur Ermittlung des Erntegutmassendurchsatzes in einer landwirtschaftlichen Erntemaschine, insbesondere einem Feldhäcksler (10), wobei die Erntemaschine wenigstens eine Vorpreßwalze (20) aufweist, die mit einem Förderelement zusammenwirkt, wobei der Abstand (d) zwischen dem Förderelement und der Vorpreßwalze (20) aufgrund des jeweiligen Erntegutdurchsatzes zwischen einer minimalen Grenzlage und einer maximalen Grenzlage variiert, mit einer Abstandsmeßvorrichtung (36, 38, 40), die dem Abstand (d) zwischen der Vorpreßwalze (20) und dem Förderelement entsprechende Abstandssignale bereitstellt, mit einem Geschwindigkeitsgeber (52), der der Durchflußgeschwindigkeit des Ernteguts entsprechende Geschwindigkeitssignale bereitstellt, und mit einer Rechnereinrichtung (46), die die Abstandssignale und die Geschwindigkeitssignale zur Ermittlung aktueller Massendurchsatzwerte heranzieht, sowie mit wenigstens einem Meßwertaufnehmer, dessen Signale von der Rechnereinrichtung (46) in die Ermittlung der aktuellen Massendurchsatzwerte einbezogen werden und zur Korrektur der anhand der Abstands- und der Geschwindigkeitssignale ermittelten Massendurchsatzwerte dienen, **dadurch gekennzeichnet, daß** der Meßwertaufnehmer ein Kraftaufnehmer (48) ist, der im Bereich der maximalen Grenzlage (35) einer verstellbaren Vorpreßwalze (20) anordenbar und zur Aufnahme und Erfassung der auf die Vorpreßwalze (20) wirkenden Verstellkräfte vorgesehen ist.

2. Vorrichtung nach Anspruch 1, **dadurch gekennzeichnet, daß** das Förderelement eine Vorpreßwalze (22) ist.

3. Vorrichtung nach Anspruch 2, **dadurch gekennzeichnet, daß** für im wesentlichen übereinander angeordnete Vorpreßwalzen (20, 22), von denen die obere Vorpreßwalze (20) gegen auf sie wirkende Kräfte nach oben bis zu der maximalen Grenzlage (35) ausweichen kann, wenigstens ein im Bereich der maximalen Grenzlage (35) wirksamer Kraftaufnehmer (48) vorgesehen ist, der die auf die obere Vorpreßwalze (20) wirkenden Kräfte erfaßt.

4. Vorrichtung nach einem der vorhergehenden Ansprüche, **dadurch gekennzeichnet, daß** zwei Kraftaufnehmer (48) vorgesehen sind, die im Bereich jedes der beiden Enden einer verstellbaren Vorpreßwalze (20) anordenbar sind.

5. Vorrichtung nach einem der Ansprüche 1 bis 4, **dadurch gekennzeichnet, daß** im Bereich der Aufnahmefläche des Kraftaufnehmers (48) ein Elastomer vorgesehen ist, das den Kraftaufnehmer (48) gegen Überlast schützt.

6. Vorrichtung nach einem der Ansprüche 1 bis 5, **dadurch gekennzeichnet, daß** die Abstandsmeßvorrichtung (36, 38, 40) derart ausgebildet ist, daß sie zur Messung des Walzenabstands (d) im mittleren Bereich einer verstellbaren Vorpreßwalze (20) angreift.

7. Vorrichtung nach einem der Ansprüche 1 bis 6, **dadurch gekennzeichnet, daß** die Abstandsmeßvorrichtung ein Seilpotentiometer (40) enthält.

8. Vorrichtung nach einem der ansprüche 1 bis 7, **dadurch gekennzeichnet, daß** als Geschwindigkeitsgeber ein Drehzahlgeber, insbesondere ein Impulsgeber (52), vorgesehen ist.

9. Vorrichtung nach einem der Ansprüche 1 bis 8, **dadurch gekennzeichnet, daß** als Geschwindigkeitsgeber ein Drehzahlgeber (52) zur Drehzahlerfassung einer ortsfest gelagerten Vorpreßwalze (22) vorgesehen ist.

10. Erntemaschine, insbesondere Feldhäcksler, mit einem Erntevorsatz (12), mit wenigstens einem Paar das Erntegut führenden Vorpreßwalzen (20, 22), deren Abstand (d) aufgrund des jeweiligen Erntegutdurchsatzes zwischen einer minimalen Grenzlage und einer maximalen Grenzlage (32) variiert, mit einem Auswurfkanal (26) und mit einer nach einem der Ansprüche 1 bis 9 ausgebildeten Durchsatzmeßvorrichtung.

11. Erntemaschine nach Anspruch 10, **dadurch gekennzeichnet, daß** eine obere auslenkbare Vorpreßwalze (20) durch wenigstens eine Federanordnung nach unten gegen eine ortsfest gelagerte untere Vorpreßwalze (22) gedrückt wird, wobei die Federanordnung bei größer werdendem Abstand (d) der Vorpreßwalzen (20, 22) den Druck auf das Durchsatzmaterial erhöht.

12. Verfahren zur Ermittlung des Erntegutmassendurchsatzes in einer landwirtschaftlichen Erntemaschine, insbesondere einem Feldhäcksler (10), bei dem Erntegut zwischen wenigstens einer das Erntegut führenden Vorpreßwalze (20) und einem Förderelement der Erntemaschine hindurchgeführt wird, deren Abstand (d) aufgrund des jeweiligen Erntegutdurchsatzes zwischen einer minimalen Grenzlage und einer maximalen Grenzlage variiert, wobei eine Abstandsmeßvorrichtung (36, 38, 40) dem Abstand (d) zwischen der Vorpreßwalze (20) und dem Förderelement entsprechende Abstandssignale bereitstellt, ein Geschwindigkeitsgeber (52) der Durchflußgeschwindigkeit des Ernteguts entsprechende Geschwindigkeitssignale bereitstellt, und ein Rechnereinrichtung (46) die Abstandssignale und die Geschwindigkeitssignale zur Ermittlung aktueller Massendurchsatzwerte heranzieht, sowie die Signale wenigstens eines Meßwertaufnehmers (48) von der Rechnereinrichtung (46) in die Ermittlung der aktuellen Massendurchsatzwerte einbezogen werden und zur Korrektur der anhand der Abstands- und der Geschwindigkeitssignale ermittelten Massendurchsatzwerte dienen, und wobei die Rechnereinrichtung (46) innerhalb eines mittleren Abstandsbereichs der Vorpreßwalze (20) vom Förderelement die Durchsatzmenge in Abhängigkeit des Produktes aus einem Walzenabstandssignal und dem Geschwindigkeitssignal bestimmt, **dadurch gekennzeichnet, daß** die Rechnereinrichtung (46) im Bereich der maximalen Grenzlage (32) der Vorpreßwalze (20), in der die verstellbare Vorpreßwalze (20) sich im Meßbereich des Meßwertaufnehmers, der ein Kraftaufnehmers (48) ist, befindet, den Massendurchsatzwert in Abhängigkeit des Produkts einerseits aus einem maximalen Walzenabstandswert zuzüglich eines Kraftaufnehmersignals und andererseits dem Geschwindigkeitssignal bestimmt.

13. Verfahren nach Anspruch 12, **dadurch gekennzeichnet, daß** die Rechnereinrichtung (46) bei der Bildung des Walzenabstandssignals ein von der Abstandsmeßvorrichtung (36, 38, 40) bereitgestelltes Abstandssignal unter Berücksichtigung der Kennlinie einer auf die verstellbare Vorpreßwalze (20) wirkenden Federanordnung korrigiert.

14. Verfahren nach Anspruch 12 oder 13, **dadurch gekennzeichnet, daß** die Rechnereinrichtung (46) für einen unteren Abstandsbereich der Vorpreßwalzen (20, 22), in dem diese im wesentlichen ihren minimalen Abstand zueinander einnehmen, einen konstanten Wert für die Durchsatzmenge ausgibt, sofern eine in einem Materialflußkanal angeordnete Lichtschranke (30) einen Erntegutdurchsatz anzeigt.

15. Verfahren nach Anspruch 14, **dadurch gekenn-**

**zeichnet, daß** der konstante Wert gleich dem Produkt aus einem minimalen Walzenabstandswert und dem Durchflußgeschwindigkeitssignal, insbesondere dem Walzendrehzahlsignal, ist.

16. Verfahren nach einem der Ansprüche 12 bis 15, **dadurch gekennzeichnet, daß** die Rechnereinrichtung (46) die Mengendurchsatzwerte $M_t$ anhand folgender Beziehung ermittelt:

$$M_t = k * (d_1 + d_2 + d_3) * \omega$$

mit

$$d_1 = 1/2 * d_{min} * f(boolean)$$

$$d_2 = f(R) * d_{max} + f(Feder)$$

$$d_3 = f(F);$$

dabei ist k eine Konstante, $\omega$ ein Meßwert des Geschwindigkeitsgebers, insbesondere die Walzendrehzahl, $d_1$, $d_2$ und $d_3$ abgeleitete Walzenabstände, $d_{min}$ ein minimaler Walzenabstand, $d_{max}$ ein maximaler Walzenabstand, f(boolean) eine logische Funktion anhand der ein Lichtschrankensignal ausgewertet wird, f(R) ein von der Abstandsmeßvorrichtung (40) abgeleiteter und auf den maximalen Walzenabstand normierter Walzenabstandswert, f (Feder) ein aus der Federkennlinie der Vorpreßwalzen-Federanordnung in Abhängigkeit des Walzenabstandes (d) abgeleiteter Wert und f(F) ein von einem oder mehreren Kraftaufnehmern (48) abgeleiteter Verstellkraftwert.

**Claims**

1. A throughput measuring device for determining the mass crop throughput in an agricultural harvesting machine, especially a forage harvester (10), wherein the harvesting machine comprises at least one pre-compression roller (20) which cooperates with a conveyor element, wherein the spacing (d) between the conveyor element and the pre-compression roller (20) varies between a minimum limit position and maximum limit position in dependence on the current crop throughput, with a spacing measuring device (36, 38, 40) which provides spacing signals corresponding to the spacing (d) between the pre-compression roller (20) and the conveyor element, with a speed transducer (52) which provides speed signals corresponding to the throughflow speed of the crop and with a computer device (46) which utilizes the spacing signals and the speed signals to determine current mass throughput values, as well as with at least one measured value sensor whose signals are taken into account by the computer device (46) in the determination of the current mass throughput values and serve to correct the mass throughput values determined on the basis of the spacing and speed signals, **characterized in that** the measured value sensor is a force sensor (48) which can be arranged in the region of the maximum limit position (35) of an adjustable pre-compression roller (20) and is provided to accept and detect the adjusting forces acting on the pre-compression roller (20).

2. A device according to claim 1, **characterized in that** the conveyor element is a pre-compression roller (22).

3. A device according to claim 2, **characterized in that**, with pre-compression rollers (20, 22) arranged essentially one above the other, of which the upper pre-compression roller (20) can deflect upwardly against the forces acting thereon as far as the maximum limit position (35), at least one force sensor (48) is provided in the region of the maximum limit position (35) and detects the forces acting on the upper pre-compression roller (20).

4. A device according to any of the preceding claims, **characterized in that** two force sensors (48) are provided and can be arranged at each of the two ends of an adjustable pre-compression roller (20).

5. A device according to any of claims 1 to 4, **characterized in that** an elastomer is provided in the region of the sensing surface of the force sensor (48) and protects the force sensor (48) against overloading.

6. A device according to any of claims 1 to 5, **characterized in that** the spacing measuring device (36, 38, 40) is so formed that it engages a middle region of an adjustable pre-compression roller (20) for measuring the roller spacing (d).

7. A device according to any of claims 1 to 6, **characterized in that** the spacing measuring device includes a rope potentiometer (40).

8. A device according to any of claims 1 to 7, **characterized in that** a rotary transducer, especially a pulse transducer (52) is provided as the speed transducer.

9. A device according to any of claims 1 to 8, **characterized in that** a rotary transducer (52) for sensing the speed of rotation of a pre-compression roller (22) journalled in a fixed position is provided as the speed transducer.

10. A harvesting machine, especially a forage harvester, with a harvesting header (12), with at least one pair of pre-compression rollers (20, 22) guiding the crop, whose spacing (d) varies between a minimum limit position and a maximum limit position on account of the current crop throughput, with a discharge channel (26) and with a throughput measuring device formed in accordance with any of claims 1 to 9.

11. A harvesting machine according to claim 10, **characterized in that** an upper pre-compression roller (20) which can deflect is biased downwards by at least one spring arrangement against a lower pre-compression roller (22) journalled in a fixed position, wherein the spring arrangement increases the pressure on the throughput material as the spacing (d) of the pre-compression rollers (20, 22) becomes greater.

12. A method of determining the mass crop throughput in an agricultural harvesting machine, especially a forage harvester (10), in which crop is fed through between at least one pre-compression roller (20) guiding the crop and a conveyor element of the harvesting machine, whose spacing (d) varies between a maximum limit position and a maximum limit position in dependence on the current crop throughput, wherein spacing measuring device (36, 38, 40) provides spacing signals corresponding to the spacing (d) between the pre-compression roller (20) and the conveyor element, a speed sensor (52) provides speed signals corresponding to the throughput speed of the crop and a computer device (46) utilises the spacing signals and the speed signals to determine current mass throughput values, and wherein the signals from at least one measured value sensor (48) are taken into account by the computer device (46) in the determination of the current mass throughput values and serve for correction of the mass throughput values determined on the basis of the spacing and speed signals, and wherein the computer device (46) determines the throughput amount in dependence on the product of a roller spacing signal and the speed signal within a middle spacing range of the pre-compression roller (20) and conveyor element, **characterized in that** the computer device (46) determines the mass throughput value in dependence on the product of on the one hand a maximum roller spacing value plus a force sensor signal and on the other hand the speed signal in the region of the maximum limit position (32) of the pre-compression roller (20), in which the adjustable pre-compression roller (20) is in the measuring range of the measured value sensor, which is a force sensor (48).

13. A method according to claim 12, **characterized in that** the computer device (46), in forming the roller spacing signal corrects a spacing signal provided by the spacing measuring device (36, 38, 40) taking into account the characteristic curve of a spring arrangement acting on the adjustable pre-compression roller (20).

14. A method according to claim 12 or 13, **characterized in that** the computer device (46) issues a constant value for the throughput amount for a lower spacing range of the pre-compression rollers (20, 22), in which these essentially assume their minimum spacing from one another, insofar as a light barrier (30) arranged in a material flow channel indicates a throughput of crop.

15. A method according to claim 14, **characterized in that** the constant value is equal to the product of a minimum roller spacing value and the through-flow speed signal, especially the roller speed of rotation signal.

16. A method according to any of claims 12 to 15, **characterized in that** the computer device (46) determines the throughput amount value Mt on the basis of the following relationship:

$$\text{a.} \quad M_t = k * (d_1 + d_2 + d_3) * ⊛$$

with

$$d_1 = 1/2 * d_{min} * f(boolean)$$

$$d_2 - f(R) * d_{max} + f(spring)$$

$$d_3 = f(F);$$

wherein k is a constant, $⊛$ is a measured value of the speed transducer, especially the roller speed of rotation, $d_1$, $d_2$ and $d_3$ are derived roller spacings, drum is a minimum roller spacing, $d_{max}$ is a maximum roller spacing, f(boolean) is a logical function on the basis of which a light barrier signal is evaluated, f(R) is roller spacing value derived from the spacing measuring device (40) and normalised relative to the maximum roller spacing, f(spring) is value derived from the spring characteristic curve of the pre-compression roller spring arrangement in dependence on the roller spacing (d) and f(F) is an adjusting force value derived from one or more force sensors (48).

## Revendications

1. Dispositif de mesure du débit pour déterminer le débit de produit récolté dans une moissonneuse agricole, en particulier une récolteuse-hacheuse (10), la moissonneuse présentant au moins un rouleau de précompression (20), qui coopère avec un élément de transport, la distance (d) entre l'élément de transport et le rouleau de précompression (20) variant, en raison du débit respectif de produit récolté, entre une position limite minimale et une position limite maximale, comportant un dispositif de mesure de la distance (36, 38, 40) qui fournit à la distance (d) entre le rouleau de précompression (20) et l'élément de transport des signaux de distance adéquats, comportant un générateur de vitesse (52) qui fournit à la vitesse de débit du produit récolté des signaux de vitesse adéquats et comportant un dispositif calculateur (46) qui se sert des signaux de distance et des signaux de vitesse pour la détermination des valeurs actuelles du débit, ainsi que comportant au moins un enregistreur des valeurs mesurées, dont les signaux sont inclus par le dispositif calculateur (46) dans la détermination des valeurs actuelles du débit et servent à la correction des valeurs du débit déterminées à l'aide des signaux de distance et de vitesse, **caractérisé en ce que** l'enregistreur des valeurs mesurées est un enregistreur des forces (48), qui est prévu de manière à être disposé dans la zone de la position limite (35) d'un rouleau de précompression (20) réglable et pour l'enregistrement et la saisie des forces de déplacement agissant sur le rouleau de précompression (20).

2. Dispositif selon la revendication 1, **caractérisé en ce que** l'élément de transport est un rouleau de précompression (22).

3. Dispositif selon la revendication 2, **caractérisé en ce qu'**il est prévu pour les rouleaux de précompression (20 22) disposés pour l'essentiel l'un au-dessus de l'autre, dont le rouleau de précompression supérieur (0) peut dévier, contre les forces agissant sur lui, vers le haut jusqu'à la position limite maximale (35), au moins un enregistreur des forces (48) efficace dans la zone de la position limite maximale (35), qui saisit les forces agissant sur le rouleau de précompression supérieur (20).

4. Dispositif selon l'une des revendications précédentes, **caractérisé en ce que** sont prévus deux enregistreurs des forces (48) qui peuvent être disposés dans la zone de chacune des deux extrémités d'un rouleau de précompression (20) réglable.

5. Dispositif selon l'une des revendications 1 à 4, **caractérisé en ce qu'**il est prévu, dans la zone de la surface d'appui de l'enregistreur des forces (48), un élastomère qui protège l'enregistreur des forces (48) contre la surcharge.

6. Dispositif selon l'une des revendications 1 à 5, **caractérisé en ce que** le dispositif de mesure de la distance (36, 38, 40) est conçu de manière qu'il s'appuie, pour la mesure de la distance entre rouleaux (d), dans la zone centrale d'un rouleau de précompression (20) réglable.

7. Dispositif selon l'une des revendications 1 à 6, **caractérisé en ce que** le dispositif de mesure de la distance est un potentiomètre à câble (40).

8. Dispositif selon l'une des revendications 1 à 7, **caractérisé en ce qu'**il est prévu, en tant que générateur de vitesse, un générateur de nombre de tours, en particulier un générateur d'impulsions (52).

9. Dispositif selon l'une des revendications 1 à 8, **caractérisé en ce qu'**il est prévu, en tant que générateur de vitesse, un générateur de nombre de tours (52) pour la saisie du nombre de tours d'un rouleau de précompression (22) monté de manière stationnaire.

10. Moissonneuse, en particulier récolteuse-hacheuse, comportant un accessoire avant pour récolte (12), comportant au moins une paire de rouleaux de précompression (20, 22) guidant le produit récolté, dont la distance (d) varie, en raison du débit respectif de produit récolté, entre une position limite minimale et une position limite maximale (32), comportant un canal d'éjection (26) et comportant un dispositif de mesure du débit conçu selon une des revendications 1 à 9.

11. Moissonneuse selon la revendication 10, **caractérisée en ce qu'**un rouleau de précompression (20) supérieur pouvant dévier est poussé, par au moins un agencement de ressort, vers le bas contre un rouleau de précompression (22) inférieur monté de manière stationnaire, l'agencement de ressort élevant la poussée sur le produit débité au fur et à mesure que la distance (d) entre les rouleaux de précompression (20, 22) augmente.

12. Procédé de mesure du débit de produit récolté dans une moissonneuse agricole, en particulier une récolteuse-hacheuse (10), dans lequel le produit récolté est guidé entre au moins un rouleau de précompression (20) guidant le produit récolté et un élément de transport de la moissonneuse, dont la distance (d), en raison du débit respectif de produit récolté, varie entre une position limite minimale et une position limite maximale, où un dispositif de mesure de la distance (36, 38, 40) fournit à la distance (d) entre le rouleau de précompression (20) et l'élément de transport des signaux de distance adéquats, un générateur de vitesse (52) fournit à la vitesse de débit du produit récolté des signaux de vitesse adéquats, et un dispositif calculateur (46) se sert des signaux de distance et des signaux de vitesse pour la détermination des valeurs actuelles du débit, et les signaux d'au moins un enregistreur des valeurs mesurées (48) sont inclus par le dispositif calculateur (46) dans la détermination des valeurs actuelles du débit et servent à la correction des valeurs du débit déterminées à l'aide des signaux de distance et de vitesse, et où le dispositif calculateur (46) détermine, à l'intérieur d'une zone moyenne de distance du rouleau de précompression (20) à l'élément de transport, la quantité du débit en fonction du produit à partir d'un signal de distance entre rouleaux et du signal de vitesse, **caractérisé en ce que** le dispositif calculateur (46) dans la zone de la position limite maximale (32) du rouleau de précompression (20) dans laquelle le rouleau de précompression (20) réglable se trouve dans la zone de mesure de l'enregistreur des valeurs mesurées, qui est un enregistreur des forces (48), détermine la valeur du débit en fonction, d'une part du produit, à partir d'une valeur maximale de distance entre rouleaux en plus d'un signal de l'enregistreur de forces et, d'autre part du signal de vitesse.

13. Procédé selon la revendication 12, **caractérisé en ce que** le dispositif calculateur (46) lors de la formation du signal de distance entre rouleaux corrige un signal de distance, fourni par le dispositif de mesure de la distance (36, 38, 40) en prenant en compte la courbe caractéristique d'un agencement de ressort agissant sur le rouleau de précompression (20) réglable.

14. Procédé selon la revendication 12 ou 13, **caractérisé en ce que** le dispositif calculateur (46) donne, pour une zone inférieure de distance des rouleaux de précompression (20, 22) dans laquelle ceux-ci prennent pour l'essentiel leur distance minimale l'un par rapport à l'autre, une valeur constante pour la quantité du débit, si une barrière lumineuse (30) disposée dans le canal d'écoulement du produit affiche un débit de produit récolté.

15. Procédé selon la revendication 14, **caractérisé en ce que** la valeur constante est égale au produit d'une valeur minimale de distance entre rouleaux par le signal de vitesse du débit, en particulier le signal de nombre de tours des rouleaux.

16. Procédé selon l'une des revendications 12 à 15, **caractérisé en ce que** le dispositif calculateur (46) détermine les valeurs du débit $M_t$ au moyen de la relation suivante :

$$M_t = k * (d_1 + d_2 + d_3) * \omega$$

dans laquelle

$$d_1 = 1/2 * d_{min} * f \text{ (booléen)}$$

$$d_2 = f(R) * d_{max} + f(\text{ressort})$$

$$d_3 = f(F),$$

où k est une constante, $\omega$ une valeur de mesure d'un générateur de vitesse, en particulier le nombre de tours des rouleaux, $d_1$, $d_2$ et $d_3$ les distances déduites entre rouleaux, $d_{min}$ une distance minimale entre rouleaux, $d_{max}$ une distance maximale entre rouleaux, f(booléen) une fonction logique au moyen de laquelle un signal de la barrière lumineuse est évalué, f(R) une valeur de distance entre rouleaux déduite par le dispositif de mesure de la distance (40) et réduite à la distance maximale entre rouleaux, f(ressort) une valeur déduite de la courbe caractéristique du ressort de l'agencement de ressort du rouleau de précompression en fonction de la distance (d) entre rouleaux et f(F) une valeur de force de réglage déduite par un ou plusieurs enregistreurs des forces (48).

Fig. 1

Fig. 2

Fig. 3

```
┌─────────────────────────────┐
│ Initialisation t:=0; M_t=0  │──── 100
└─────────────────────────────┘
              │
              ▼
    ┌──────────────┐
    │ t := t + 1   │──── 102
    └──────────────┘
              │
              ▼
         ◇ 104
   Material da?              Nein    ┌──────────┐
   Signal Lichtschr.  ──────────────▶│ d_1 := 0;│──── 106
         ◇                           │ d_2 := 0;│
              │ Ja                   │ d_3 := 0 │
              ▼                      └──────────┘
         ◇ 110
                            Nein    ┌──────────────┐
   R_poti > 0 ?       ──────────────▶│ d_1 := d_min/2;│──── 112
         ◇                          │ d_2 := 0;     │
              │ Ja                  │ d_3 := 0      │
              ▼                     └──────────────┘
         ◇ 114
                            Nein    ┌────────────────────┐
   F_Anschlag > 0 ?   ──────────────▶│ d_1 := d_min/2;     │──── 116
         ◇                          │ d_2 := f(R) * d_max;│
              │ Ja                  │ d_3 := 0            │
              ▼                     └────────────────────┘
                                    ┌────────────────────┐
                                    │ d_1 := d_min/2;     │──── 118
                                    │ d_2 := f(R) * d_max;│
                                    │ d_3 := f(F)        │
                                    └────────────────────┘
```

$$d_1 := 0; \quad d_2 := 0; \quad d_3 := 0 \qquad 106$$

$$d_1 := d_{min}/2; \quad d_2 := 0; \quad d_3 := 0 \qquad 112$$

$$d_1 := d_{min}/2; \quad d_2 := f(R) * d_{max}; \quad d_3 := 0 \qquad 116$$

$$d_1 := d_{min}/2; \quad d_2 := f(R) * d_{max}; \quad d_3 := f(F) \qquad 118$$

$$108$$

$$\text{Write: } M_t(t) \qquad 122 \qquad \longleftarrow \qquad M_t := k * d_{ges} * \omega \qquad 120 \qquad \longleftarrow \qquad d_{ges} = d_1 + d_2 + d_3$$

14